# EUROPÄISCHE PATENTSCHRIFT

(11) **EP 0 482 026 B1**
(45) Veröffentlichungstag und Bekanntmachung des Hinweises auf die Patenterteilung: **06.09.1995**
(21) Anmeldenummer: 90909726.3
(22) Anmeldetag: 22.06.1990
(51) Int. Cl.: G11B 11/10, G11B 5/40

(54) **AUFZEICHNUNGS- UND/ODER WIEDERGABEGERÄTE MIT EINEM KÜHLKÖRPER FÜR EIN ZU KÜHLENDES ELEMENT**
RECORDING AND/OR REPRODUCING APPRATUS WITH A COOLING BODY FOR AN ELEMENT TO BE COOLED
APPPPAREIL D'ENREGISTREMENT ET/OU DE REPRODUCTION AVEC UN REFROIDISSEUR POUR UN ELEMENT A REFROIDIR

(30) Priorität: 14.07.1989 DE 3923327
(43) Veröffentlichungstag der Anmeldung: 29.04.1992
(73) Patentinhaber: Deutsche Thomson-Brandt GmbH, 78003 Villingen-Schwenningen (DE)
(72) Erfinder: ZUCKER, Friedhelm, D-7733 Mönchweiler (DE)
(86) Internationale Anmeldenummer: EP9000988
(87) Internationale Veröffentlichungsnummer: WO9101552

(56) Entgegenhaltungen:
- BE-A- 649 274
- PATENT ABSTRACTS OF JAPAN vol. 12, no. 431 (P-786)(3278) 15 November 1988, &JP-A-63 164004
- PATENT ABSTRACTS OF JAPAN vol. 2, no. 45 (E-24) 27 März 1978, & JP-A-53 10413
- PATENT ABSTRACTS OF JAPAN vol. 7, no. 38 (P-176)(1183) 16 Februar 1983, & JP-A-57 189319
- PATENT ABSTRACTS OF JAPAN vol. 9, no. 150 (E-324)(1873) 25 Juni 1985, & JP-A-6032347
- PATENT ABSTRACTS OF JAPAN vol. 7, no. 127 (P-201)(1272) 3 Juni 1983, & JP-A-5845675

## Beschreibung

Die Erfindung betrifft ein Aufzeichnungs- und/oder Wiedergabegerät mit einem Kühlkörper für ein zu kühlendes Element.

Der Schreibmagnet eines magneto-optischen Aufzeichnungs- und Wiedergabegerätes kann während des Betriebs so heiß werden, daß er gekühlt werden muß.

Aus der JP-A-63164004 ist es bekannt, daß der Magnetkern eines Schreiblesemagneten mit einem Kühlkörper verbunden ist, auf dessen der magneto-optischen Platte zugewandten Seite in tangentialer Richtung verlaufende Kühlrippen sitzen. Der Kühlkörper reicht in radialer Richtung vom Plattenrand bis etwa zur Plattenmitte. So offenbart die JP-A-63/164 004 die im Oberbegriff des Anspruchs 1 genannten Merkmale.

Weil jedoch in einem magneto-optischen Aufzeichnungs- und/oder Wiedergabegerät nur sehr wenig Raum für einen Kühlkörper zur Verfügung steht, ist es Aufgabe der Erfindung, einen Kühlkörper so zu gestalten, daß er trotz geringer Abmessungen eine starke Kühlwirkung erzielt.

Die Erfindung löst diese Aufgabe dadurch, daß die Kühlrippen auf dem Umfang konzentrischer Kreise sitzen, deren Mittelpunkt mit dem Drehpunkt eines plattenförmigen rotierenden Aufzeichnungsträgers zusammenfällt.

### Es zeigen

Figur 1 Auführungsbeispiel der Erfindung von von
Figur 2 das Ausführungsbeispiel von oben.

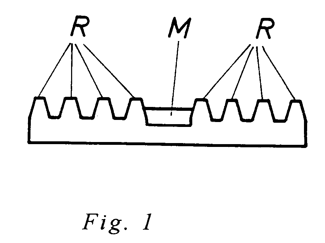

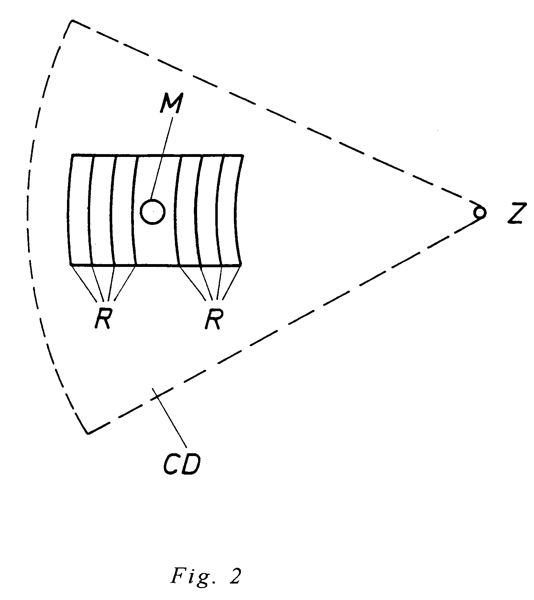

An Hand der Figuren 1 und 2 wird nun ein Ausführungsbeispiel beschrieben.

In der Figur 1 ist der Scheibmagnet M auf einer Seite zwischen den Kühlrippen R des Kühlkörpers eingebettet. Er kann aber auch auf der anderen Seite des Kühlkörpers angeordnet sein. Die Kühlrippen R können auf einer Seite oder auf beiden Seiten vorgesehen sein. Weil sich der plattenförmige Aufzeichnungsträger CD, z.B. eine magneto-optische Platte, in Figur 1 über dem Kühlkörper dreht, bläst er Luft zwischen die Kühlrippen R. Die zwischen den Kühlrippen durchfließende Luft bewirkt nun eine sehr gute Kühlung des Schreibmagneten.

In Figur 2, sitzen die Kühlrippen R auf dem Umfang konzentrischer Kreise, deren Mittelpunkt Z mit dem Drehpunkt der Platte zusammenfällt. Der von der magneto-optischen Platte CD erzeugte Luftstrom wird von den Kühlrippen auf eine kreisförmige Bahn gelenkt.

Ein wesentlicher Vorteil der Erfindung besteht darin, daß der durch die Rotation des plattenförmigen Aufzeichnungsträgers erzeugte Luftstrom zur Kühlung genutzt wird. Es ist daher kein zusätzliches Gebläse erforderlich, das relativ viel Platz beanspruchen würde, der in einem magneto-optischen Aufzeichnungs- und Wiedergabegerät jedoch fehlt.

Die Erfindung ist z.B. für magneto-optische Aufzeichnungs- und Wiedergabegeräte geeignet, die mit einem Schreibmagneten ausgestattet sind, der dicht über oder unter der Oberfläche der magneto-optischen Platte angeordnet ist.

## Patentansprüche

1. Aufzeichnungs- und/oder Wiedergabegerät mit einem Kühlkörper für ein zu kühlendes Element (M), der unmittelbar über oder unter einem rotierenden, plattenförmigen Aufzeichnungsträger (CD) angeordnet ist und der mit Kühlrippen (R) versehen ist, die in Rotationsrichtung des Aufzeichnungsträgers (CD) verlaufen, **dadurch gekennzeichnet**, daß die Kühlrippen (R) auf dem Umfang konzentrischer Kreise sitzen, deren Mittelpunkt (Z) mit dem Drehpunkt des plattenförmigen rotierenden Aufzeichnungsträgers (CD) zusammenfällt.

2. Kühlkörper nach Anspruch 1, **dadurch gekennzeichnet**, daß das zu kühlende Element (M) zwischen den Kühlrippen (R) in den Kühlkörper eingebettet ist.

3. Kühlkörper nach Anspruch 1 oder 2, **dadurch gekennzeichnet,** daß die Kühlrippen (R) auf der dem Aufzeichnungsträger (CD) zugewandten Seite des Kühlkörpers sitzen.

4. Kühlkörper nach Anspruch 1, 2 oder 3, **dadurch gekennzeichnet**, daß auf beiden Seiten des Kühlkörpes Kühlrippen sitzen.

## Claims

1. A recording and/or reproduction apparatus with a cooling body for an element to be cooled (M) which is located directly above or below a rotary disc-like recording medium (CD) and provided with cooling ribs (R) running in the direction of rotation of the recording medium (CD), characterised in that the cooling ribs (R) are arranged on the circumference of concentric circles, the centre point (Z) of which coincides with the centre of rotation of a disc-type rotary recording medium (CD).

2. Cooling body according to claim 1, characterised in that the element to be cooled (M) is embedded in the cooling body between the cooling ribs (R).

3. Cooling body according to claim 1 or 2, characterised in that the cooling ribs (R) are arranged on the side of the cooling body facing the recording medium (CD).

4. Cooling body according to claim 1,2 or 3, characterised in that cooling ribs are arranged on both sides of the cooling body.

## Revendications

1. Appareil d'enregistrement et/ou de lecture comportant un refroidisseur pour un élément à refroidir (M), disposé directement au-dessus ou en dessous d'un support d'enregistrement (CD) en forme de disque et muni de nervures de refroidissement (R) dirigées dans le sens de la rotation du support d'enregistrement (CD), **caractérisé en ce que** les nervures de refroidissement (R) sont disposées à la circonférence de cercles concentriques dont le centre (Z) coïncide avec le centre de rotation du support d'enregistrement (CD) rotatif du type disque.

2. Refroidisseur selon la revendication 1, **caractérisé en ce que** l'élément à refroidir (M) est inséré dans le refroidisseur entre les nervures de refroidissement (R).

3. Refroidisseur selon la revendication 1 ou 2, **caractérisé en ce que** les nervures de refroidissement (R) sont disposées sur la face du refroidisseur tournée vers le support d'enregistrement (CD).

4. Refroidisseur selon l'une des revendications 1, 2 ou 3, **caractérisé en ce que** des nervures de refroidissement sont disposées sur les deux faces du refroidisseur.
